# EUROPÄISCHE PATENTSCHRIFT

(11) **EP 1 506 357 B1**
(45) Veröffentlichungstag und Bekanntmachung des Hinweises auf die Patenterteilung: **19.10.2005**
(21) Anmeldenummer: 03735402.4
(22) Anmeldetag: 16.05.2003
(51) Int. Cl.: F16H 9/18

(54) **AUTOMATGETRIEBE MIT EINEM VARIATOR MIT WENIGSTENS ZWEI KEGELSCHEIBENSÄTZEN**
AUTOMATIC GEARBOX WITH A VARIATOR WITH AT LEAST TWO SETS OF CONICAL DISKS
TRANSMISSION AUTOMATIQUE A VARIATEUR POURVU D'AU MOINS DEUX JEUX DE POULIES CONIQUES

(30) Priorität: 22.05.2002 DE 10222519
(43) Veröffentlichungstag der Anmeldung: 16.02.2005
(73) Patentinhaber: ZF FRIEDRICHSHAFEN AG, 88038 Friedrichshafen (DE)
(72) Erfinder: REISCH, Matthias, 88214 Ravensburg (DE); SICH, Bernhard, 88045 Friedrichshafen (DE); FAHL, Holger, 76571 Gaggenau (DE)
(86) Internationale Anmeldenummer: PCT/EP2003/005148
(87) Internationale Veröffentlichungsnummer: WO 2003/098072

(56) Entgegenhaltungen:
- EP-A- 0 389 030
- EP-A- 0 711 934
- WO-A-03/021134
- DE-C- 3 702 131
- GB-A- 2 041 116
- US-A- 3 948 111

## Beschreibung

Die Erfindung betrifft ein Automatgetriebe mit einem Variator mit wenigstens zwei Kegelscheibensätzen gemäß der im Oberbegriff des Patentanspruches 1 näher definierten Art. Ein solches Automatgetriebe ist aus der EP-A-0 711 934 bekannt.

Aus der Praxis sind Automatgetriebe in Form stufenloser Umschlingungsgetriebe bekannt, bei welchen wenigstens eine Kegelscheibe eines Kegelscheibensatzes eines Variators axial beweglich ausgeführt ist. Durch die axiale Bewegung der Kegelscheibe erfolgt eine Abstandsänderung zwischen den Kegelscheiben eines Kegelscheibensatzes. Dabei ändern sich jeweils die Umschlingungsradien eines Umschlingungsbereiches, auf welchen ein Umschlingungselement über einen Kegelscheibensatz geführt wird. Die Änderung der Umschlingungsradien führt zu einer Übersetzungsverstellung. Ausreichend große axiale Anpreßkräfte zwischen dem Umschlingungselement und den Kegelscheibensätzen des Variators gewährleisten eine Drehmomentübertragung von einem Kegelscheibensatz über das Umschlingungselement auf einen zweiten Kegelscheibensatz des Variators.

Bei einem herkömmlichen Umschlingungsgetriebe bewirkt eine während des Betriebs aus den Trumkräften des Umschlingungselementes resultierende Reaktionskraft mit zunehmender Belastung eine elastische Verformung der Kegelscheiben. Darüber hinaus führt eine axial bewegliche Kegelscheibe aufgrund eines gewissen Führungsspieles in einer Linearführung, über welche die axiale Bewegung der Kegelscheibe realisiert wird, eine nicht ganz vermeidbare Kippbewegung aus. Aufgrund der elastischen Verformung der Kegelscheiben und der aus dem Führungsspiel resultierenden Kippbewegung der axial beweglichen Kegelscheiben werden die Kegelscheiben eines Kegelscheibensatzes von dem Umschlingungselement bzw. von den durch das Umschlingungselement auf die Kegelscheiben aufgebrachten Trumkräfte "aufgespreizt". Diese Aufspreizung ist in einem mittleren Abschnitt der Umschlingungsbereiche des Umschlingungselementes der beiden Kegelscheibensätze am größten, was nachteilhafterweise zu einem radialen Abgleiten des Umschlingungselementes in Richtung der Drehachse der Kegelscheiben der Kegelscheibensätze bzw. nach "innen" führt.

In einem Auslaufbereich des Umschlingungselementes ist eine Aufspreizung der Kegelscheiben geringer als es im vorbeschriebenen mittleren Abschnitt der Umschlingungsbereiche der Fall ist. Dies führt dazu, daß das Umschlingungselement nur unter Überwindung von hohen Klemmkräften aus dem jeweiligen Kegelscheibensatz ausgekeilt werden kann, wodurch ein Übertragungswirkungsgrad des Variators bzw. des Umschlingungsgetriebes unerwünschterweise reduziert wird, und eine Belastung des Umschlingungselementes vergrößert wird.

Aufgabe der vorliegenden Erfindung ist es, ein Automatgetriebe zur Verfügung zu stellen, welches einen hohen Übertragungswirkungsgrad aufweist und bei dem zur Erhöhung einer Lebensdauer eine Belastung eines Umschlingungselementes reduziert ist.

Erfindungsgemäß wird diese Aufgabe mit einem Automatgetriebe gemäß den Merkmalen des Patentanspruches 1 gelöst.

Bei dem Automatgetriebe nach der Erfindung mit einem Variator und wenigstens zwei Kegelscheibensätzen, über die ein Umschlingungselement zur Drehmomentübertragung mit stufenloser Übersetzungsänderung geführt ist, besteht durch eine Veränderung der Anordnung der Drehachsen zweier Kegelscheibensätze durch Verkippen wenigstens einer Kegelscheibe eines Kegelscheibensatzes gegenüber einer zweiten Kegelscheibe dieses Kegelscheibensatzes vorteilhafterweise die Möglichkeit, einen durch eine Aufspreizung eines Kegelscheibensatzes von einem idealen Umschlingungsverlauf des Umschlingungselementes abweichenden realen Umschlingungsverlauf eines Kegelscheibensatzes in Richtung eines idealen Umschlingungsverlaufes zu korrigieren.

Insbesondere besteht die Möglichkeit, einer Aufspreizung zwischen den Kegelscheiben eines Kegelscheibensatzes in einem mittleren Abschnitt des Umschlingungsbereiches, in welchem eine Aufspreizung vorzugsweise ihr Maximum aufweist, ganz gezielt durch ein Verkippen wenigstens einer Kegelscheibe des betreffenden Kegelscheibensatzes entgegenzuwirken. Damit wird ein radiales Abgleiten des Umschlingungselementes im Bereich des Maximums der Aufspreizung der Kegelscheiben vermieden bzw. in ausreichendem Maße derart reduziert, daß eine Auskeilkraft des Riemens aus dem Umschlingungsbereich des Umschlingungselementes verringert wird, was wiederum zu einer Herabsetzung der Belastung des Umschlingungselementes führt. Die Herabsetzung der Belastung des Umschlingungselementes erhöht die Lebensdauer des Umschlingungselementes, wodurch das Automatgetriebe vorteilhafterweise längere Wartungsintervalle aufweist.

Weitere Vorteile und vorteilhafte Ausgestaltungen des Gegenstandes nach der Erfindung sind den Patentansprüchen, der Beschreibung und der Zeichnung entnehmbar.

Mehrere vorteilhafte Ausführungsbeispiele des Automatgetriebes nach der Erfindung sind in der Zeichnung schematisch vereinfacht dargestellt und werden in der nachfolgenden Beschreibung näher erläutert, wobei in der Beschreibung für gleiche Bauteile bzw. für funktionsgleiche Bauteile die selben Bezugszeichen verwendet werden.
Es zeigt:
- Fig.1: eine stark schematisierte Teilschnittansicht eines Variators eines stufenlosen Automatgetriebes;
- Fig.2: einen Kegelscheibensatz eines Variators in einer stark schematisierten Einzelansicht;
- Fig.3: eine Seitenansicht einer Kegelscheibe des Kegelscheibensatzes gemäß Fig. 2;
- Fig.4: einen Kegelscheibensatz eines Variators in einer stark schematisierten Einzelansicht;
- Fig.5: den Kegelscheibensatz gemäß Fig. 4, wobei eine Verlagerung einer Welle infolge hoher Trumkräfte dargestellt ist;
- Fig.6: ein weiteres Beispiel eines Kegelscheibensatzes eines Variators in einer stark schematisierten Einzelansicht und
- Fig.7: den Kegelscheibensatz gemäß Fig. 6, wobei eine Welle aufgrund hoher Trumkräfte eine definierte Durchbiegung aufweist.

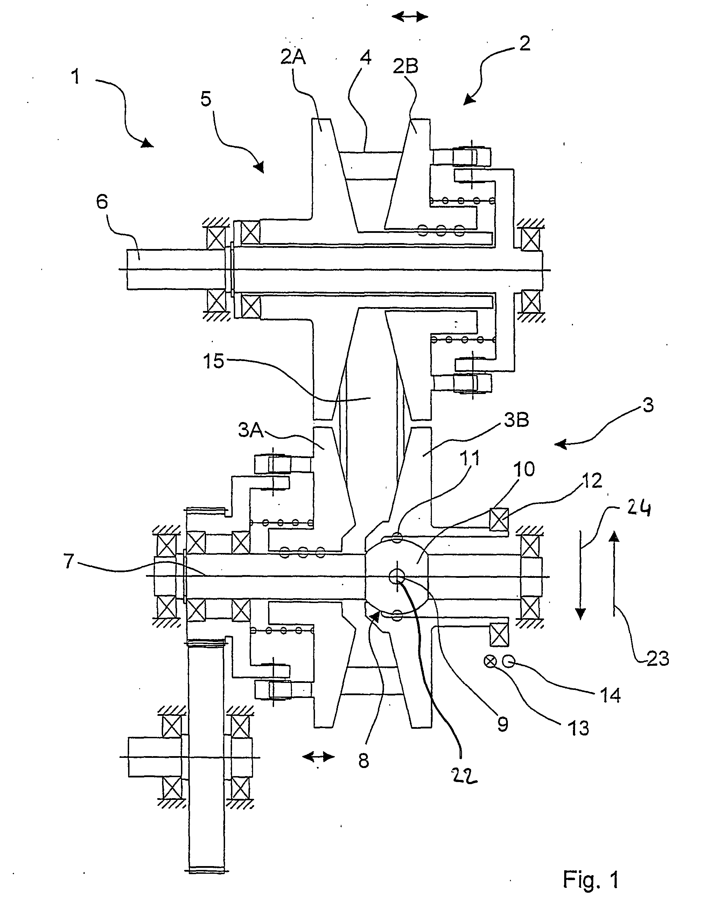

In Fig. 1 ist ein Automatgetriebe 1 mit zwei Kegelscheibensätzen 2 und 3 dargestellt, welche jeweils zwei Kegelscheiben 2A, 2B und 3A, 3B aufweisen. Zwischen den Kegelscheiben 2A, 2B und den Kegelscheiben 3A, 3B ist ein Umschlingungselement 4 zur Drehmomentübertragung von dem ersten Kegelscheibensatz 2 auf den zweiten Kegelscheibensatz 3 vorgesehen.

Die beiden Kegelscheibensätze 2, 3 sowie das Umschlingungselement 4 stellen Komponenten eines Variators 5 des Automatgetriebes 1 dar, welches vorliegend als ein stufenloses Umschlingungsgetriebe mit einem als Trockenverbundriemen bzw. Riemen 4 ausgeführten Umschlingungselement ausgebildet ist, wobei das Umschlingungselement auch eine Kette oder ein Schubgliederband sein kann. Der hier vorgesehene Trockenverbundriemen hat gegenüber Ketten oder Schubgliederbändern den Vorteil, daß dieser kein Öl benötigt, weshalb die Anpreßkräfte zur Drehmomentübertragung wesentlich niedriger sind.

Bei dem in Fig. 1 schematisiert dargestellten Ausschnitt des Automatgetriebes 1 ist jeweils die Kegelscheibe 2B und die Kegelscheibe 3A in axialer Richtung einer Welle 6 bzw. 7, welche vorliegend jeweils als eine Antriebswelle 6 bzw. eine Abtriebswelle 7 ausgebildet ist, in Bezug auf die Kegelscheibe 2A bzw. die Kegelscheibe 3B verschiebbar angeordnet. Durch eine Abstandsänderung der Kegelscheiben 2A, 2B bzw. der Kegelscheiben 3A, 3B kann eine Übersetzungsänderung in an sich bekannter Art und Weise erfolgen, wodurch sich die Radien, auf denen der Riemen 4 auf den Kegelscheiben 2A bis 3B läuft, verändern. Der Verstellvorgang kann eingeleitet werden, indem die Kegelscheiben 2A, 2B bzw. 3A, 3B der Kegelscheibensätze 2 bzw.' 3 durch eine Erhöhung oder Erniedrigung einer axialen Anpreßkraft eines nicht näher dargestellten Axialaktors aufeinander zu oder voneinander weg bewegt werden.

Um eine unzulässig hohe Kraftvergrößerung zur Übersetzungsverstellung wirkungsvoll zu vermeiden und eine Verstellgeschwindigkeit des Variators 5 zu erhöhen, ist die Kegelscheibe 3B drehfest auf der Abtriebswelle 7 auf einem Gleichlaufgelenk 8 gelagert und um eine Kippachse 9 kippbar ausgeführt.

Durch eine Verkippung der Kegelscheibe 3B nimmt die der Riemenbreite des Riemens 4 entsprechende Äquidistante, d. h. jeweils die Berührlinie des Riemens 4 mit den beiden Kegelscheiben 3A, 3B des Kegelscheibensatzes 3 im Umschlingungsbereich, die bei unverkippter Kegelscheibe 3B wenigstens annähernd eine Kreislinie dargestellt, wenigstens annähernd die Form einer Spirale an. In Abhängigkeit der Kipprichtung der Kegelscheibe 3B schraubt sich der Riemen 4 ohne wesentliche Erhöhung einer axialen Druckkraft auf den Riemen 4 auf einen größeren oder einen kleineren Umschlingungsradius bzw. Umschlingungsdurchmesser in Bezug auf die Kegelscheiben 3A, 3B nach außen oder nach innen.

Die dargestellte Kombination der axialen Verschieblichkeit der Kegelscheiben 2B und 3A sowie der kippbaren Kegelscheibe 3B führt dazu, daß der Variator 5 bzw. die über den Variator 5 einstellbare Übersetzung mit hohen Verstellgeschwindigkeiten in eine gewünschte Übersetzung verändert werden kann, wobei die Verstellung im wesentlichen durch die Kippbewegung der Kegelscheibe 3B durchgeführt wird und die axiale Verstellung der Kegelscheiben lediglich zur Unterstützung vorgesehen ist.

Die konstruktive Ausführung des Variators 5 bietet somit die Möglichkeit, eine Übersetzungsverstellung nur über eine Kippbewegung der Kegelscheibe 3B ohne eine axiale Verstellung der Kegelscheibe 2B und/oder der Kegelscheibe 3A durchzuführen.

Durch die Verkippung der Kegelscheibe 3B bzw. die Möglichkeit, die Anordnung zwischen den Drehachsen der Kegelscheiben 3A, 3B zu ändern, ist gewährleistet, daß eine Übersetzungsverstellung ohne auf den Riemen und die Kegelscheiben 2A bis 3B einwirkende unzulässig hohe Druckkräfte durchgeführt wird, womit ein Riemenverschleiß, eine unerwünscht hohe Wärmeentwicklung sowie eine Selbsthemmung des Riemens 4 auf einfache Art und Weise vermieden bzw. reduziert wird.

Das Gleichlaufgelenk 8 ist vorliegend mit einem kugelförmigen inneren Gelenkkörper 10 ausgeführt, auf welchem die Kegelscheibe 3B kippbar geführt ist, wobei das Gleichlaufgelenk 8 als Radiallager, Axiallager und als Schwenklager für die Kegelscheibe 3B vorgesehen ist.

Zur Drehmomentmitnahme sind zwischen dem Gelenkkörper 10 und der Kegelscheibe 3B mehrere als gehärtete, geschliffene Kugeln ausgeführte Sperrkörper 11 vorgesehen, die in nicht näher dargestellten Rillen, welche an der Oberfläche des Gelenkkörpers 10 eingeschliffen sind, geführt sind und zur Übertragung des Drehmomentes von der Kegelscheibe 3B auf die Abtriebswelle 7 gleichzeitig in die Kegelscheibe 3B eingreifen.

In einer hiervon abweichenden, nicht näher dargestellten Ausführungsform des Automatgetriebes nach der Erfindung kann es auch vorgesehen sein, daß die Sperrkörper 11 zur Drehmomentübertragung als Blechmembrane ausgeführt werden, die wesentlich billiger herstellbar sind, da sie nicht gehärtet oder geschliffen sind.

Ebenfalls kann es bei einer weiteren, von der in der Zeichnung gezeigten Ausführung abweichenden konstruktiven Ausgestaltung des erfindungsgemäßen Automatgetriebes vorgesehen sein, daß die drehfeste, aber eine Kippbewegung zulassende Verbindung zwischen der Kegelscheibe 3B und der Abtriebswelle 7 derart elastisch ausgeführt ist, daß die Kippbewegung der Kegelscheibe 3B ab einer bestimmten Druckkraft zwischen der Kegelscheibe 3B und dem Riemen 4 zustande kommt.

Damit wird auf einfache Art und Weise einer Überlastung des Riemens 4 entgegengewirkt. Darüber hinaus kann durch eine entsprechende konstruktive Ausgestaltung der elastischen Verbindung zwischen der Abtriebswelle und der Kegelscheibe eine zu große Abweichung der Äquidistanten von ihrer idealen kreisförmigen Form minimiert werden, wodurch ein Wirkungsgrad des Variators vorteilhafterweise erhöht wird.

Um eine Verkippung der in Fig. 1 dargestellten Kegelscheibe 3B um die Kippachse 9 zu erreichen, greift an einem Lager 12 eine nicht näher dargestellte Aktuatoreinrichtung derart an, daß die Kegelscheibe 3B entsprechend den im Bereich des Lagers 12 in Fig. 1 dargestellten Richtungen 13 oder 14 in die Zeichenebene hinein oder aus dieser heraus verschoben wird, wodurch die Kegelscheibe 3B eine Kippbewegung um die Kippachse 9 ausführt.

Des weiteren besteht die Möglichkeit, das Lager 12 mittels der Aktuatoreinrichtung in Richtung des antriebsseitigen Kegelscheibensatzes 2 und von diesem weg zu verstellen, wie es mit Richtungspfeilen 23, 24 dargestellt ist, wodurch die Kegelscheibe 3B um eine weitere Kippachse 22 verkippt werden kann. Die weitere Kippachse 22 ist senkrecht zur Drehachse der Kegelscheibe 3A sowie zum Leer- bzw. Lasttrum 15 des Riemens 4 angeordnet.

Mit dieser aktiv über die Aktuatoreinrichtung steuerbaren Kippbewegung wird einer der aktuell an dem Variator 5 eingestellten Übersetzung sowie dem aktuell von dem Variator 5 zu übertragenden Drehmoment entsprechenden Aufspreizung des Kegelscheibensatzes 3 bzw. der Kegelscheiben 3A, 3B auf einfache Art und Weise entgegengewirkt.

Mit einer Verkippung der Kegelscheibe 3B um die weitere Kippachse 22 wird insbesondere eine Aufspreizung der Kegelscheiben 3A, 3B in einem Abschnitt des Umschlingungsbereiches reduziert bzw. gänzlich ausgeglichen, in welchem in der Regel ein Maximum der Aufspreizung vorliegt. Damit wird ein radiales Nach-Innen-Gleiten des Riemens 4 im Umschlingungsbereich bzw. im Abschitt des Umschlingungsbereiches, welches mit zunehmender Aufspreizung der Kegelscheiben 3A, 3B auftritt und unter anderem hohe Auskeilkräfte verursacht, wirksam vermieden.

Selbstverständlich kann es auch vorgesehen sein, daß eine Verkippung einer Kegelscheibe eines Kegelscheibensatzes mit Hilfe einer Aktuatoreinrichtung zur Verbesserung eines Wirkungsgrades des Automatgetriebes realisiert wird, bei der eine Verkippung der Scheibe um eine Kippachse erfolgt, die senkrecht zur Drehachse der kippbaren Kegelscheibe angeordnet ist, und wobei der maximale Kippweg der Kegelscheibe in Richtung der anderen Kegelscheibe eines Kegelscheibensatzes jeweils mit dem Maximum der Scheibenaufspreizung des betreffenden Kegelscheibensatzes zusammenfällt. Das heißt, daß eine Lage der weiteren Kippachse jeweils in Abhängigkeit der Richtung einer resultierenden, an dem Kegelscheibensatz angreifenden Kraft, welche aus den Trumkräften des Riemens resultiert, variiert. Dabei kann eine zusätzliche Verkippung der Kegelscheibe zur Einstellung einer Übersetzungsänderung des Variators in der vorbeschriebenen Art und Weise durch die Aktuatoreinrichtung oder mit einer weiteren Aktuatoreinrichtung vorgesehen sein.

Die Aktuatoreinrichtung zur Verstellung der Anordnung der Drehachse der Kegelscheibe 3B gegenüber der Drehachse der Kegelscheibe 3A ist als ein Linearantrieb ausgeführt und weist vorliegend einen Elektromotor mit einer Spindel auf, um die Kegelscheibe 3B um die Kippachse 9 sowie die weitere Kippachse 22 zu verkippen. Der maximale Kippweg bzw. Stellweg des Lagers 12 liegt in Abhängigkeit des jeweilig vorliegenden Anwendungsfalles in einem Bereich von 1/10 mm bis hin zu einem oder mehreren Millimetern.

Alternativ hierzu kann selbstverständlich anstatt des Elektromotors und der Spindel auch eine piezoelektrische Stelleinheit vorgesehen werden, wobei größere Stellwege über ein zwischen dem piezoelektrischen Aktor und dem Lager 12 angeordnetes Stellwegvergrößerungssystem realisiert werden können.

Das Lager 12 ist vorliegend als ein Rillenkugellager ausgeführt, wobei eine bei der Verstellung des Lagers 12 auftretende Kippbewegung des Außenringes des Lagers 12 gegenüber dem Linearantrieb von einem zwischen der Spindel und dem Außenring des Lagers 12 angeordneten Koppelelement aufgefangen wird.

Wenn das Lager 12 als ein Pendelrollenlager ausgeführt ist, kann auf das Koppelelement verzichtet werden, da die Kippbewegungen von einem Pendelrollenlager kompensiert werden.

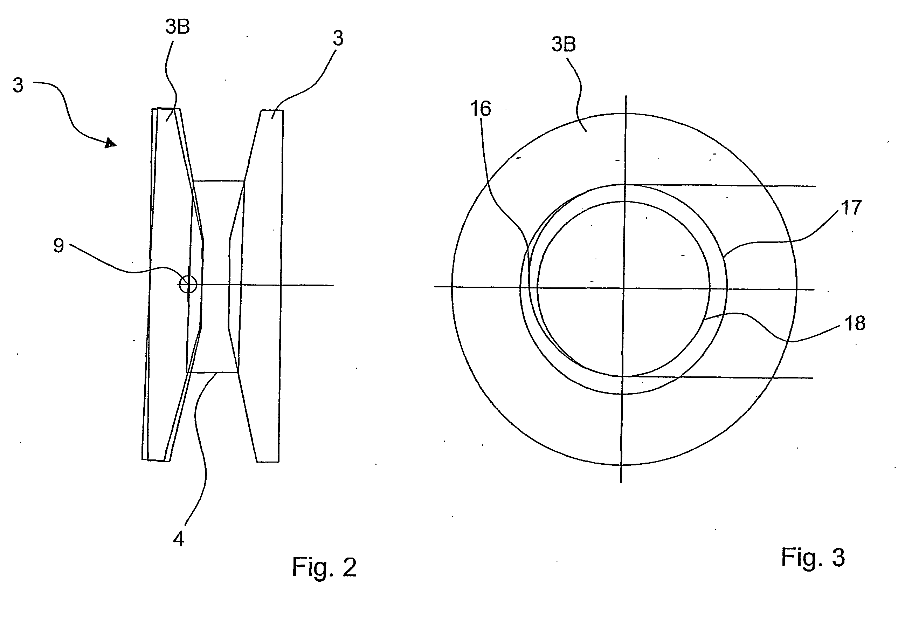

In Fig. 2 ist der Kegelscheibensatz 3 gemäß Fig. 1 dargestellt, wobei die Kegelscheibe 3B gleichzeitig in unverkippter sowie in verkippter Lage gezeigt ist. Damit korrespondierend ist in Fig. 3 die Veränderung des Einlauf- bzw. des Auslaufradius des Riemens 4 aufgrund der in Fig. 2 dargestellten Kippbewegung der Kegelscheibe 3B gegenüber der Kegelscheibe 3A gezeigt, wobei die Äquidistante 16 wie in Fig. 3 dargestellt in verkippter Lage der Kegelscheibe 3B eine Spiralform aufweist.

Des weiteren ist in Fig. 3 ein Kreis 17 dargestellt, dessen Radius dem Umschlingungsradius im Einlaufbereich des Riemens 4 des Kegelscheibensatzes 3 entspricht. Ein weiterer Kreis 18, dessen Radius dem Umschlingungsradius im Auslaufbereich des Riemens 4 des Kegelscheibensatzes 3 entspricht, stellt die ideale Form der Äquidistante am Ende der Übersetzungsverstellung dar.

Durch die Kippbewegung der Kegelscheibe 3B um die Kippachse 9, die senkrecht zur Drehachse der Kegelscheibe 3B steht und wenigstens annähernd parallel zu einem Leertrum bzw. einem Lasttrum 15 des Riemens 4 verläuft, ausgehend von einer fluchtenden Anordnung der Drehachse der Kegelscheibe 3A und der Drehachse 3B in eine Anordnung, bei der die Drehachsen der Kegelscheiben 3A und 3B einen Winkel miteinander einschließen, schraubt sich der Riemen 4 von dem Radius des Kreises 17 in Richtung des Radius des weiteren Kreises 18, bis die Form der Äquidistante 16 dem weiteren Kreis 18 entspricht und die entsprechende Übersetzung am Variator 5 eingestellt ist.

In einer weiteren Ausgestaltung des erfindungsgemäßen Automatgetriebes kann es selbstverständlich auch vorgesehen sein, daß eine Übersetzungsverstellung und/oder eine Wirkungsgraderhöhung eines Variators lediglich durch die Kippbewegung einer Kegelscheibe erfolgt, und daß auf eine axiale Verstellung der Kegelscheiben eines Kegelscheibenpaares, wie es bei aus der Praxis bekannten CVT-Getrieben für eine Übersetzungsverstellung erforderlich ist, verzichtet werden kann. Hierbei sind die auf der Antriebswelle bzw. auf der Abtriebswelle in axialer Richtung jeweils beweglich angeordneten Kegelscheiben mit einer sogenannten Drehmomentrampe kombiniert, mittels welcher eine drehmomentabhängige Anpreßkraft zwischen den Kegelscheiben und dem Riemen 4 eingestellt wird.

Bei der in der Zeichnung dargestellten Ausführungsform des Automatgetriebes 1 wird eine axiale Anpreßkraft zwischen den Kegelscheiben 2A, 2B und 3A, 3B und dem Riemen 4 ebenfalls jeweils über eine Drehmomentrampe aufgebracht. Die Druckkraft wird dabei proportional zu einem anliegenden Drehmoment und als Funktion des Stellweges der betreffenden Kegelscheibe und somit als Funktion der aktuell eingestellten Übersetzung erzeugt, wobei das anliegende Drehmoment in einer an sich bekannten Art und Weise auf Wälzkörper der Drehmomentrampe übertragen wird. Aufgrund der Anordnung der Wälzkörper im Bereich der Kegelscheiben 2B und 3A wird das anliegende Drehmoment in eine auf die Kegelscheibensätze 2, 3 und den Riemen 4 wirkende axiale Anpreßkraft umgewandelt, ohne daß dabei eine Übersetzungsänderung auftritt.

Darüber hinaus besteht auch die Möglichkeit, daß mehr als eine Kegelscheibe des Variators kippbar ausgestaltet ist. So kann es durchaus vorgesehen sein, daß beide Scheiben eines Kegelscheibensatzes kippbar ausgeführt sind.

Darüber hinaus liegt es selbstverständlich im Ermessen des Fachmannes, ein Automatgetriebe gemäß der Erfindung mit einem Variator auszubilden, bei dem wenigstens eine Kegelscheibe in radialer Richtung der Kegelscheiben translatorisch bewegbar ist und/oder eine Drehachse einer Kegelscheibe taumelnd bzw. oszillierend gegenüber der Drehachse der zweiten Kegelscheibe eines Kegelscheibensatzes bewegt werden kann, so daß eine Anordnung von Drehachsen zweier Kegelscheiben eines Kegelscheibensatzes verändert wird und eine Übersetzungsverstellung durchgeführt wird und/oder generell der Wirkungsgrad des Automatgetriebes verbessert wird.

Eine die Kegelscheibe betätigende Aktuatoreinrichtung kann hierbei zweckmäßig mit einem exzentrischen Antrieb versehen sein.

Des weiteren kann es in einer Ausgestaltungsvariante auch vorgesehen sein, daß die einzelnen Kegelscheiben zusätzlich in axialer Richtung mittels vorzugsweise hydraulischer Stellorgane beweglich ausgeführt sind, um einen senkrechten Abstand zwischen den Kegelscheiben eines Kegelscheibensatzes in an sich bekannter Art und Weise zu verändern und eine Verstellgeschwindigkeit des Variators weiter zu erhöhen.

Grundsätzlich liegt es im Ermessen des Fachmannes die verschiedenen vorgenannten Möglichkeiten, zum Variieren der Anordnung von Drehachsen zweier Kegelscheiben eines Kegelscheibensatzes zueinander in Abhängigkeit des jeweilig vorliegenden Anwendungsfalles in geeigneter Art und Weise zu kombinieren, wobei die Kegelscheiben kippbar und/oder in radialer Richtung der Kegelscheiben verstellbar und/oder deren Drehachse taumelnd bzw. oszillierend beweglich und/oder axial verschieblich ausgeführt sein können.

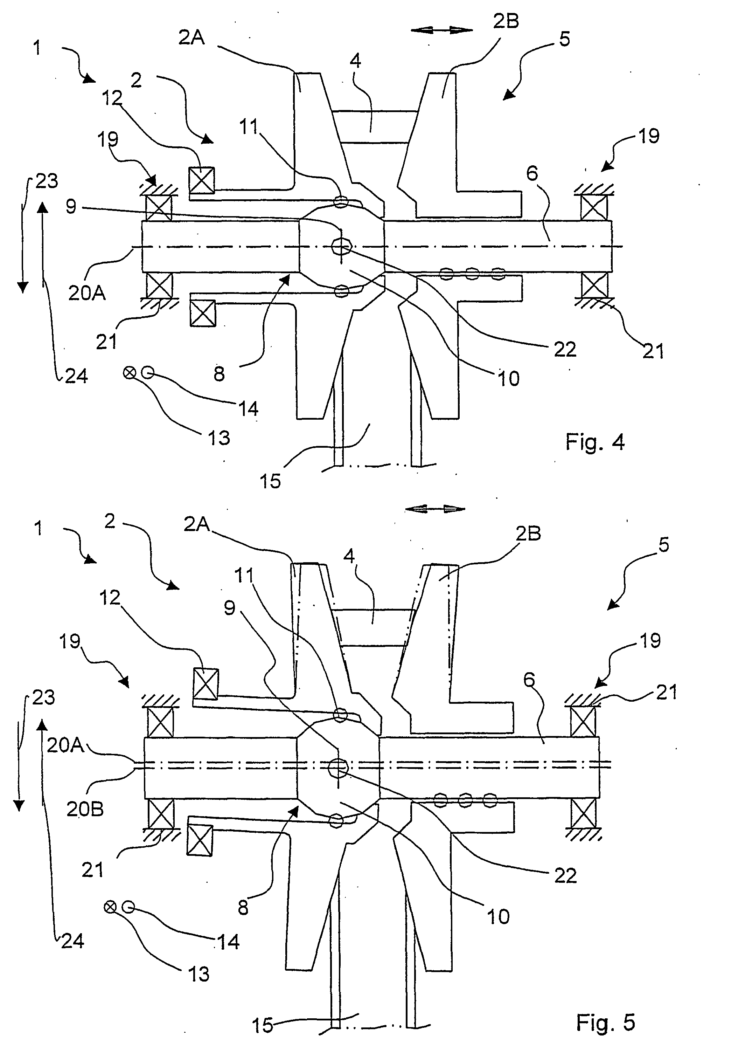

Bezug nehmend auf Fig. 4 ist der Kegelscheibensatz 2 des Variators 5 mit einer in axialer Richtung verschieblich ausgeführten Kegelscheibe 2B und einer kippbaren Kegelscheibe 2A dargestellt. Eine Lagerung 19 der Antriebswelle 6 ist dabei derart elastisch ausgeführt, daß bei ansteigenden Trumkräften des Riemens 4 die Antriebswelle 6 und damit der Kegelscheibensatz 2 in Richtung des in Fig. 4 nicht näher dargestellten weiteren Kegelscheibensatzes 3 verschoben wird.

Die Fig. 5 zeigt den Kegelscheibensatz 2 in einer im Vergleich zur Darstellung in Fig. 4 verschobenen Position, wobei die Verschiebung auf hohe auf die Kegelscheiben einwirkende Trumkräfte zurückzuführen ist. Um die verändernde Position der Antriebswelle 6 im Vergleich zu Fig. 4 zu verdeutlichen, ist in Fig. 5 eine Drehachse der Antriebswelle 6 jeweils in ihrer ursprünglichen Position 20A und in der neuen verschobenen Position 20B näher gezeigt.

Die Verschiebung der Antriebswelle 6 resultiert aus einer elastischen Gehäuseverformung eines Lagergehäuses 21 der Lagerung 19. Das von der Lagerung 19 der Antriebswelle 6 entkoppelte Lager 12 verbleibt wenigstens annähernd in seiner ursprünglichen Position, wodurch die Kegelscheibe 2A in der in Fig. 5 dargestellten Art und Weise um eine weitere Kippachse 22 verkippt wird. Die weitere Kippachse 22 steht senkrecht auf der Drehachse der Kegelscheibe 2A sowie auf dem Leertrum bzw. Lasttrum 15 des Riemens 4.

Die in Fig. 5 dargestellte Verschiebung der Antriebswelle 6 ist die in der Zeichenebene darstellbare Verschiebung, wobei die Verschiebung der Antriebswelle 6 in Richtung der resultierenden Kraft erfolgt, welche sich aus der Summe aller im Umschlingungsbereich des Kegelscheibensatzes 2 auftretenden Trumkräfte bzw. Umschlingungskräfte ergibt. Die Richtung dieser resultierenden Kraft kann beliebig im Raum ausgerichtet sein, wobei die Hauptwirkungsrichtung der resultierenden Kraft in Richtung des nicht näher dargestellten weiteren Kegelscheibensatzes 3 liegt.

Aufgrund der sphärischen Ausbildung des Gleichlaufgelenkes erfolgt eine mit der Verschiebung der Antriebswelle 6 korrespondierende Verkippung der Kegelscheibe 2A, die einem durch eine Kegelscheibenaufspreizung verursachten verlustbehafteten und einen Wirkungsgrad des Automatgetriebes reduzierenden Spirallauf des Riemens 4 zwischen den beiden Kegelscheiben 2A, 2B entgegengewirkt. Die Aufspreizung der Kegelscheiben 2A, 2B tritt infolge hoher Trumkräfte des Riemens und der Bauteilelastizitäten der Kegelscheiben 2A, 2B in Fig. 5 auf, wobei die strichpunktierte Darstellung der Kegelscheiben 2A, 2B die in Fig. 4 dargestellte Position wiedergibt und die durchgezogene Darstellung der Kegelscheiben 2A, 2B den verformten zustand der Kegelscheiben 2A, 2B zeigt.

Die definierte elastische Verformbarkeit des Lagergehäuses 21 der Lagerung 19 der Antriebswelle 6 bewirkt mit steigenden Trumkräften eine Soll-Scheibenvorverkippung, welche eine Funktion der zu erwartenden Scheibenspreizung darstellt. Die zu erwartende Scheibenspreizung der Kegelscheiben 2A, 2B ist jeweils abhängig von der aktuell eingestellten Übersetzung an dem Variator 5 und den Trumkräften. Die Trumkräfte stützen sich über die Lagerung 19 der Antriebswelle 6 sowie die nicht näher dargestellte Lagerung der Abtriebswelle 7 ab.

Mit dieser Ausführungsform des Automatgetriebes 1 erhält man einen direkten Zusammenhang zwischen den Achskräften der Antriebswelle 6 bzw. der Abtriebswelle 7 und einer Scheibenvorverkippung, mit welcher das radial nach innen gerichtete Gleiten des Riemens 4 und die daraus resultierenden erhöhten Auskeilkräfte auf einfache Art und Weise wirkungsvoll vermieden werden. Damit wird eine Belastung des Riemens 4 erheblich reduziert, so daß ein Riemenverschleiß verringert wird und dessen Lebensdauer erhöht wird.

Die Scheibenvorverkippung wird dabei derart eingestellt, daß ein realer, sich negativ auf die Lebensdauer des Riemens 4 auswirkender Verlauf des Riemens 4 im Umschlingungsbereich des Kegelscheibensatzes 2 in Richtung eines idealen, vorzugsweise halbkreisförmigen Verlaufs des Umschlingungsbereiches verändert wird.

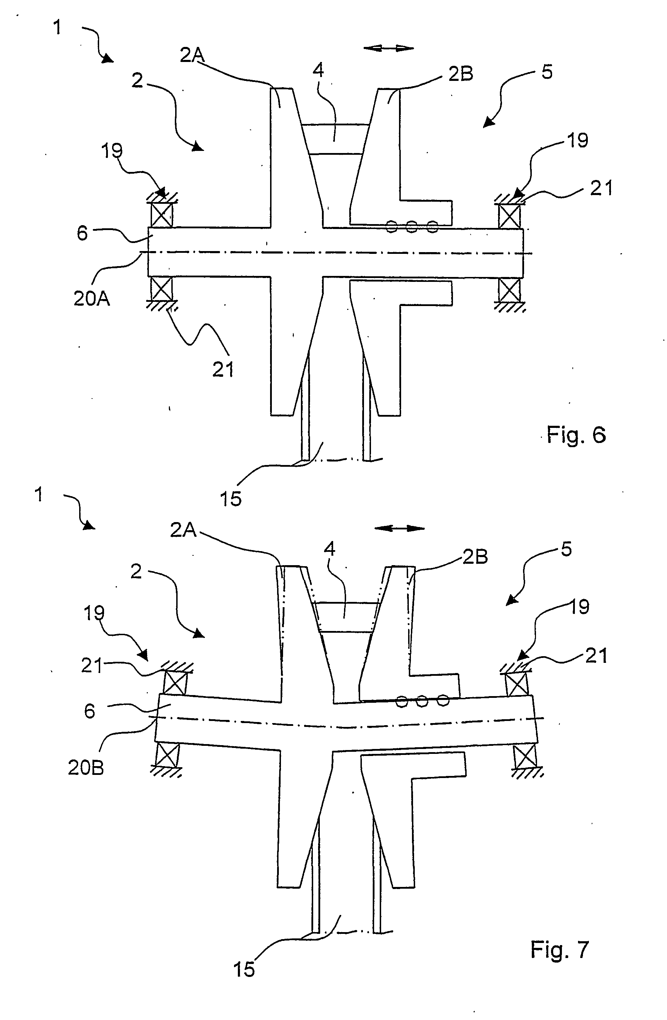

Ein weiteres Beispiel des Automatgetriebes 1 ist in Fig. 6 und Fig. 7 dargestellt, wobei in Fig. 6 der Kegelscheibensatz 2 bei geringer Drehmomentübertragung und kleinen Trumkräften dargestellt ist. Dabei tritt eine vernachlässigbare Verformung der Antriebswelle 6 auf, so daß die Kegelscheiben 2A, 2B wenigstens annähernd parallel zueinander angeordnet sind. Die Kegelscheibe 2A ist vorliegend einstückig mit der Antriebswelle 6 ausgeführt, und die Kegelscheibe 2B ist in axialer Richtung der Antriebswelle 6 verschiebbar und drehfest auf der Antriebswelle 6 angeordnet. Die axiale Verschiebung der Kegelscheibe 2B wird über einen nicht näher dargestellten Aktuator ausgeführt, um eine gewünschte bzw. erforderliche Übersetzungsveränderung an dem Kegelscheibensatz 2 und damit des Variators 5 einstellen zu können.

Steigt das zu übertragende Drehmoment an, nehmen auch die auf den Kegelscheibensatz 2 einwirkenden Trumkräfte des Riemens 4 zu, die eine entsprechende elastische Verformung der Antriebswelle 6 zur Folge haben. Die elastische Verformung der Antriebswelle 6 führt zu einem Verkippen der beiden Kegelscheiben 2A, 2B, wodurch sich eine in Fig. 7 dargestellte Lageänderung der Kegelscheiben 2A, 2B ergibt. Des weiteren ist der Darstellung gemäß Fig. 7 entnehmbar, daß die Kegelscheiben 2A, 2B aufgrund der Trumkräfte und ihrer Bauteilelastizitäten zusätzlich elastisch verformt werden. Zum besseren Verständnis sind die unverkippten Positionen der Kegelscheiben 2A, 2B sowie ihr nicht verformter Zustände in Fig. 7 in strichpunktierter Form gezeigt. Gleichzeitig zeigt die mit durchgezogenen Linien ausgeführte Darstellung der Kegelscheiben 2A, 2B die neuen Stellungen und die verformten Zustände der Kegelscheiben 2A, 2B.

Die in Fig. 5 und Fig. 7 jeweils dargestellte und während des Betriebs des Automatgetriebes 1 zu erwartende Scheibenspreizung steht in Abhängigkeit der aktuell eingestellten Übersetzung des Variators sowie der auftretenden Trumkräfte, wobei über eine mit den Bauteilbelastungen des Variators 5 korrespondierende elastische Verformung der Antriebswelle 6 eine definierte Scheibenvorverkippung eingestellt werden kann. Dazu wird insbesondere ein Flächenträgheitsmoment der Antriebswelle über deren Länge, das heißt ein Verlauf des Flächenträgheitsmomentes der Antriebswelle 6 in axialer Richtung der Antriebswelle 6 derart eingestellt, daß eine den Wirkungsgrad des Variators 5 erhöhende Scheibenvorverkippung in Abhängigkeit einer Durchbiegung bzw. einer Verformung der Antriebswelle 6 erfolgt, die wiederum in Abhängigkeit der aktuell eingestellten Übersetzung und den Trumkräften erreicht wird. Die Einstellung des Verlaufes des Flächenträgheitsmomentes der Antriebswelle 6 ist über eine entsprechende Durchmessergestaltung der Antriebswelle 6, durch ein Hohlwellenprofil oder andere geeignete konstruktive Maßnahmen realisierbar.

Bei allen gezeigten erfindungsgemäßen Ausgestaltungen eines Automatgetriebes wird in vorteilhafter Weise ein Riemenspirallauf im Umschlingungsbereich der Kegelscheibensätze 2, 3 derart gezielt verringert oder zur Übersetzungsverstellung gezielt erzeugt, daß der Variator 5 bzw. das Automatgetriebe 1 einen höheren Wirkungsgrad aufweist, wodurch sich ein Kraftstoffverbrauch eines Fahrzeuges reduzieren läßt. Des weiteren wird aufgrund der Reduzierung der Auskeilkräfte eine Erwärmung des Riemens 4 verringert, wodurch der Riemen 4 insgesamt einer höheren Belastung ausgesetzt werden kann. Damit besteht vorteilhafterweise auch die Möglichkeit, über den Variator 5 höhere Drehmomente von der Antriebswelle 6 auf die Abtriebswelle 7 zu übertragen. Zusätzlich wird die Lebensdauer des Riemens 4 durch die Herabsetzung des Riemenverschleißes erhöht.

### Bezugszeichen

- 1: Automatgetriebe
- 2: Kegelscheibensatz
- 2A, B: Kegelscheiben
- 3: Kegelscheibensatz
- 3A, B: Kegelscheiben
- 4: Riemen
- 5: Variator
- 6: Antriebswelle
- 7: Abtriebswelle
- 8: Gleichlaufgelenk
- 9: Kippachse
- 10: Gelenkkörper
- 11: Sperrkörper
- 12: Lager
- 13: Stellrichtung
- 14: Stellrichtung
- 15: Leertrum, Lasttrum
- 16: Äquidistante
- 17: Kreis
- 18: weiterer Kreis
- 19: Lagerung
- 20A, 20B: Drehachse der Antriebswelle
- 21: Lagergehäuse
- 22: weitere Kippachse
- 23: Richtungspfeil
- 24: Richtungspfeil

## Patentansprüche

1. Automatgetriebe (1) mit einem Variator (5) enthaltend wenigstens zwei Kegelscheibensätzen (2, 3), wobei über die Kegelscheibensätze (2, 3) ein Umschlingungselement (4) zur Drehmomentübertragung mit stufenloser Übersetzungsänderung geführt ist und eine Anordnung der Drehachsen zweier Kegelscheiben (2A, 2B bzw. 3A, 3B) eines Kegelscheibensatzes (2 bzw. 3) **dadurch** zueinander veränderbar ist, daß mindestens eine erste Kegelscheibe (2A bzw. 3B) in Bezug auf eine zweite Kegelscheibe (2B bzw. 3A) des Kegelscheibensatzes verkippbar ist, **dadurch gekennzeichnet,**
**daß** die erste Kegelscheibe (2A, 3B) um eine erste und eine zweite Kippachse (9, 22) kippbar ist, wobei die erste Kippachse (9) senkrecht zur Drehachse der ersten Kegelscheibe (2A, 3B) und wenigstens annähernd parallel zu einem Leer-, bzw. Lasttrum (15) des Umschlingungselements (4) angeordnet ist und wobei die zweite Kippachse (22) senkrecht zur Drehachse der Kegelscheibe (2A, 3B) sowie senkrecht zum Leer-, bzw. Lasttrum (15) des Umschlingungselements (4) angeordnet ist.

2. Automatgetriebe nach Anspruch 1, **dadurch ge- kennzeichnet**, daß zur aktiven Verkippung einer Kegelscheibe (2A, 3B) um eine Kippachse (9, 22) an einem Lager (12) eine Aktuatoreinrichtung vorgesehen ist.

3. Automatgetriebe nach Anspruch 1 oder 2, **dadurch gekennzeichnet, daß** sowohl die erste Kegelscheibe (2A) in Bezug auf die zweite Kegelscheibe (2B) als auch die zweite Kegelscheibe (2B) in Bezug auf die erste Kegelscheibe (2A) verkippbar ist.

4. Automatgetriebe nach einem der Ansprüche 1 bis 3, **dadurch gekennzeichnet, daß** wenigstens eine der Kegelscheiben (2A, 2B bzw. 3A, 3B) eines Kegelscheibensatzes (2 bzw. 3) ab einer bestimmten Anpreßkraft zwischen den Kegelscheiben (2A, 2B bzw. 3A, 3B) und dem Umschlingungselement (4) verkippt.

5. Automatgetriebe nach einem der Ansprüche 1 bis 4, **dadurch gekennzeichnet, daß** eine kippbare Kegelscheibe (2A, 2B bzw. 3A, 3B) mit einer Welle (6 bzw. 7) eine drehfeste Verbindung aufweist.

6. Automatgetriebe nach Anspruch 5, **dadurch ge- kennzeichnet,** daß die drehfeste Verbindung mittels eines Gleichlaufgelenks (8) ausgeführt ist.

7. Automatgetriebe nach Anspruch 5, **dadurch ge- kennzeichnet**, daß die drehfeste Verbindung mittels einer Membran ausgeführt ist.

8. Automatgetriebe nach einem der vorhergehenden Ansprüch, **dadurch gekennzeichnet, daß** eine Lagerung (19) der den Kegelscheiben des Kegelscheibensatzes angeordneten Welle (6) derart elastisch ausgeführt ist, daß variierende Trumkräfte des Umschlingungselementes (4) eine Veränderung einer Anordnung der Welle (6) und damit einer Anordnung der Drehachsen der Kegelscheiben (2A, 2B) des Kegelscheibensatzes (2) bewirkt.

9. Automatgetriebe nach einem der vorhergehenden Ansprüche, **dadurch gekennzeichnet, daß** ein Verlauf des Flächenträgheitsmomentes der den Kegelscheiben des Kegelscheibensatzes angeordneten Welle (6) in axialer Richtung der Welle (6) derart vorgesehen ist, daß variierende Trumkräfte des Umschlingungselementes (4) eine damit korrespondierende Durchbiegung der Welle (6) und eine Veränderung der Anordnung der Drehachsen der Kegelscheiben (2A, 2B) des Kegelscheibensatzes (2) zueinander bewirken.

10. Automatgetriebe nach Anspruch 8 oder 9, **dadurch gekennzeichnet, daß** die Veränderung der Drehachsen der Kegelscheiben (2A, 2B) des Kegelscheibensatzes (2) in Abhängigkeit der Trumkräfte des Umschlingungselementes derart erfolgt, daß ein Spirallauf des Umschlingungselementes (4) in einem Umschlingungsbereich des Kegelscheibensatzes (2) zumindest annähernd ausgleichbar ist.

## Claims

1. Automatic transmission (1) having a variator (5) comprising at least two conical disc sets (2, 3), wherein over the conical disc sets (2, 3) a pulley element (4) extends for torque transmission with infinitely variable ratio change and an arrangement of the axes of rotation of two conical discs (2A, 2B and/or 3A, 3B) of a conical disc set (2 and/or 3) is variable relative to one another in that at least one conical disc (2A and/or 3B) is tiltable in relation to a second conical disc (2B and/or 3A) of the conical disc set, **characterized in that** the first conical disc (2A, 3B) is tiltable about a first and a second tilting axis (9, 22), wherein the first tilting axis (9) is disposed at right angles to the axis of rotation of the first conical disc (2A, 3B) and at least approximately parallel to an idle- and/or load strand (15) of the pulley element (4) and wherein the second tilting axis (22) is disposed at right angles to the axis of rotation of the conical disc (2A, 3B) and at right angles to the idle- and/or load strand (15) of the pulley element (4).

2. Automatic transmission according to claim 1, **characterized in that** on a bearing (12) an actuating device is provided for active tilting of a conical disc (2A, 3B) about a tilting axis (9, 22).

3. Automatic transmission according to claim 1 or 2, **characterized in that** both the first conical disc (2A) is tiltable in relation to the second conical disc (2B) and the second conical disc (2B) is tiltable in relation to the first conical disc (2A).

4. Automatic transmission according to one of claims 1 to 3, **characterized in that** at least one of the conical discs (2A, 2B and/or 3A, 3B) of a conical disc set (2 and/or 3) tilts from a specific application force between the conical discs (2A, 2B and/or 3A, 3B) and the pulley element (4) on.

5. Automatic transmission according to one of claims 1 to 4, **characterized in that** a tiltable conical disc (2A, 2B and/or 3A, 3B) has a rotationally fixed connection to a shaft (6 and/or 7).

6. Automatic transmission according to claim 5, **characterized in that** the rotationally fixed connection is implemented by means of a homocinetic joint (8).

7. Automatic transmission according to claim 5, **characterized in that** the rotationally fixed connection is implemented by means of a diaphragm.

8. Automatic transmission according to one of the preceding claims, **characterized in that** a bearing arrangement (19) of the shaft (6); which is disposed the conical discs of the conical disc set, is of such an elastic design that varying strand forces of the pulley element (4) give rise to a variation of an arrangement of the shaft (6) and hence of an arrangement of the axes of rotation of the conical discs (2A, 2B) of the conical disc set (2).

9. Automatic transmission according to one of the preceding claims, **characterized in that** a characteristic of the geometrical moment of inertia of the shaft (6), which is disposed the conical discs of the conical disc set, is provided in axial direction of the shaft (6) in such a way that varying strand forces of the pulley element (4) give rise to a corresponding sag of the shaft (6) and a variation of the arrangement of the axes of rotation of the conical discs (2A, 2B) of the conical disc set (2) relative to one another.

10. Automatic transmission according to claim 8 or 9, **characterized in that** the variation of the axes of rotation of the conical discs (2A, 2B) of the conical disc set (2) as a function of the strand forces of the pulley element (4) is effected in such a way that a spiral run of the pulley element (4) in a wrap region of the conical disc set (2) may be at least approximately compensated.

## Revendications

1. Transmission automatique (1) avec un variateur (5) comprenant au moins deux jeux de poulies coniques (2, 3), un élément de cerclage (4) passant sur les jeux de poulies coniques (2,3) pour la transmission du couple avec modification progressive du rapport de vitesse et une disposition des axes de rotation des deux poulies coniques (2A, 2B et 3A, 3B) d'un jeu de poulies coniques (2 et 3) étant modifiable l'une par rapport à l'autre par le fait qu'au moins la première poulie conique (2A ou 3B) peut être pivotée par rapport à une deuxième poulie conique (3B ou 3A) du jeu de poulies coniques, **caractérisée en ce que** la première poulie conique (2A, 3B) est pivotable autour d'un premier et d'un deuxième axe de pivotement (9, 22), le premier axe de pivotement (9) étant disposé perpendiculairement à l'axe de rotation de le première poulie conique (2A, 3B), et au moins approximativement parallèle à un brin vide ou brin de charge (15) de l'élément de cerclage (4) et le deuxième axe de pivotement (22) étant disposé perpendiculairement à l'axe de rotation de la poulie conique (2A, 3B) ainsi que perpendiculairement au brin vide et brin de charge (15) de l'élément de cerclage (4).

2. Transmission automatique selon la revendication 1, **caractérisée en ce que** pour le pivotement actif d'une poulie conique (2A, 3B) autour d'un axe de pivotement (9; 22), un dispositif d'actionnement est prévu sur un palier (12).

3. Transmission automatique selon la revendication 1 ou 2, **caractérisée en ce que** la première poulie conique (2A) est pivotable par rapport à la deuxième poulie conique (2B) et la deuxième poulie conique (2B) par rapport à la première poulie conique (2A).

4. Transmission automatique selon l'une des revendications 1 à 3, **caractérisée en ce qu'**au moins une des poulies coniques (2A, 2B ou 3A, 3B) d'un jeu de poulies coniques (2 ou 3) pivote à partir d'une force de pression donnée entre les poulies coniques (2A, 2B ou 3A, 3B) et l'élément de cerclage (4).

5. Transmission automatique selon l'une des revendications 1 à 4, **caractérisée en ce qu'**une poulie conique pivotante (2A, 2B ou 3A, 3B) présente une liaison anti-rotation avec un arbre (6 ou 7).

6. Transmission automatique selon la revendication 5, **caractérisée en ce que** la liaison anti-rotation est réalisée au moyen d'un joint homocinétique (8).

7. Transmission automatique selon la revendication 5, **caractérisée en ce que** la liaison anti-rotation est réalisée au moyen d'une membrane.

8. Transmission automatique selon l'une des revendications précédentes, **caractérisée en ce qu'**une suspension (19) de l'arbre (6) disposée entre les poulies coniques du jeu de poulies coniques est réalisée de manière élastique de sorte que les forces de brin variantes de l'élément de cerclage (4) provoquent une modification d'une disposition de l'arbre (6) et par conséquent d'une disposition des axes de rotation des poulies coniques (2A, 2B) du jeu de poulies coniques (2).

9. Transmission automatique selon l'une des revendications précédentes, **caractérisée en ce qu'**une évolution du moment d'inertie surfacique de l'arbre (6) disposé entre les poulies coniques du jeu de poulies coniques est prévue dans le sens axial de l'arbre (6) de sorte que des forces de brin variantes de l'élément de cerclage (4) provoquent une flexion correspondante de l'arbre (6) ainsi qu'une modification de la disposition des axes de rotation des poulies coniques (2A, 2B) du jeu de poulies coniques (2) l'une par rapport à l'autre.

10. Transmission automatique selon l'une des revendications 8 ou 9, **caractérisée en ce que** la modification des axes de rotation des poulies coniques (2A, 2B) du jeu de poulies coniques (2) en fonction des forces des brins de l'élément de cerclage est réalisée de sorte qu'un parcours en spiralé de l'élément de cerclage (4) dans une zone de cerclage du jeu de poulies coniques (2) est au moins approximativement compensable.
